# FASCICULE DE BREVET EUROPEEN

(11) **EP 4 124 520 B1**
(45) Date de publication et mention de la délivrance du brevet: **20.11.2024**
(21) Numéro de dépôt: 22187094.2
(22) Date de dépôt: 26.07.2022
(51) Int. Cl.: B60S 1/40

(54) **DISPOSITIF DE CONNEXION ENTRE BALAI D' ESSUYAGE ET BRAS D' ENTRAÎNEMENT**
VERBINDUNGSVORRICHTUNG ZWISCHEN WISCHBLATT UND ANTRIEBSARM
CONNECTION DEVICE BETWEEN A WIPER BLADE AND A DRIVE ARM

(30) Priorité: 30.07.2021 FR 2108308
(43) Date de publication de la demande: 01.02.2023
(73) Titulaire: Valeo Systèmes d'Essuyage, 78322 Le Mesnil Saint Denis (FR)
(72) Inventeur: HOUSSAT, Stephane, 78322 LE MESNIL SAINT DENIS (FR); GAUCHER, Vincent, 78322 LE MESNIL SAINT DENIS (FR); POTON, Eric, 78322 LE MESNIL SAINT DENIS (FR)
(74) Mandataire: Valeo Visibility

(56) Documents cités:
- WO-A1-2022/017806
- DE-A1- 102010 003 269
- DE-A1- 102010 030 880
- US-A1- 2012 060 316
- US-B1- 8 707 506

## Description

La présente invention concerne le domaine des essuie-glaces pour véhicule, et plus particulièrement les dispositifs de connexion permettant de connecter un balai d'essuyage à un bras d'entraînement.

Les systèmes d'essuyage pour véhicule sont conçus pour retirer, par balayage, les liquides et salissures qui pourraient perturber la vision d'un conducteur. Ces systèmes d'essuyage comprennent en général un bras d'entraînement, qui effectue un mouvement de va-et-vient angulaire, et des balais d'essuyage allongés équipés de lames racleuses réalisées en une matière élastique. La lame racleuse frotte contre le pare-brise et évacue ces liquides et salissures en les balayant en dehors du champ de vision du conducteur.

Le balai d'essuyage est rattaché au bras d'entraînement par un dispositif de connexion qui comprend un connecteur et un adaptateur. Le connecteur est une pièce qui est solidarisée au balai d'essuyage et qui est en général solidaire de la lame racleuse. L'adaptateur est une pièce qui est interposée entre le bras d'entraînement et le connecteur, en étant conformé pour s'engager dans une pièce terminale du bras d'entraînement. Connecteur et adaptateur coopèrent ensuite pour permettre la liaison articulée et la fixation du balai d'essuyage sur le bras d'entraînement, formant ainsi le dispositif de connexion du balai d'essuyage au bras d'entraînement.

La liaison articulée entre le connecteur et l'adaptateur comprend au moins un axe transversal de pivotement du connecteur vis-à-vis de l'adaptateur, qui est également un axe de pivotement du balai d'essuyage vis-à-vis du bras d'entraînement. L'un des organes, par exemple le connecteur, comprend en général une forme sensiblement cylindrique qui forme un pivot et qui est reçue dans un logement de forme complémentaire de l'autre organe, ici l'adaptateur.

Un adaptateur permet d'associer un balai d'essuyage à un type particulier de chape ou de bras d'entraînement, et il existe plusieurs variétés de pièces terminales. Ces variétés sont proches en apparence mais diffèrent les unes des autres par leurs dimensions, en particulier par leurs largeurs ou dimensions latérales. Elles varient également par les positions des orifices destinés à coopérer avec un bouton poussoir de verrouillage de l'adaptateur.

Il existe ainsi différents adaptateurs, de façon à pouvoir associer un balai d'essuyage donné à plusieurs pièces terminales et par extension à plusieurs bras d'entraînement. Un dispositif de connexion peut par ailleurs comprendre différents adaptateurs pouvant s'associer par emboîtement les uns dans les autres, la combinaison de ces différents adaptateurs étant capable de se connecter à un type particulier de bras d'entraînement auquel chaque adaptateur pris séparément ne peut pas se connecter, multipliant ainsi les possibilités d'assemblage d'un même balai d'essuyage.

L'association entre un type particulier de bras d'entraînement et un dispositif de connexion peut ainsi reposer sur la coopération entre l'organe de verrouillage disposé sur l'adaptateur et l'orifice du bras d'entraînement dans lequel il est destiné à se loger. Il existe plusieurs types de bras d'entraînement avec un orifice ménagé sur la paroi supérieure du bras, qui diffèrent les uns des autres au moins par la position de cet orifice. L'art antérieur ne propose néanmoins pas d'autre solution que d'interchanger l'adaptateur en fonction du type de bras souhaité, ce qui conduit à une certaine redondance des moyens techniques qui définissent ces adaptateurs.

La présente invention s'inscrit dans ce contexte en proposant un dispositif de connexion permettant une superposition entre l'organe de verrouillage d'un premier adaptateur et l'organe de verrouillage d'un deuxième adaptateur qui s'emboîte sur ce premier adaptateur, la combinaison de ces deux adaptateurs leur permettant de coopérer avec un type de bras d'entraînement différent du type de bras d'entraînement avec lequel le premier adaptateur pris isolément peut coopérer. Un exemple de dispositif de connexion pour véhicule est décrit dans le document DE102010030880.

Un objet de la présente invention concerne ainsi un dispositif de connexion pour véhicule, destiné à relier un balai d'essuyage à un bras d'entraînement, comprenant au moins un connecteur configuré pour être rendu solidaire du balai d'essuyage et au moins deux adaptateurs, l'un des adaptateurs étant configuré pour relier le connecteur à un premier type de bras d'entraînement et une combinaison des deux adaptateurs étant configurée pour relier le connecteur à un deuxième type de bras d'entraînement. Selon l'invention, chacun de ces adaptateurs comprend un organe de verrouillage configuré pour verrouiller la combinaison des deux adaptateurs au deuxième type de bras d'entraînement, ces organes de verrouillage se superposant pour solidariser la combinaison des deux adaptateurs au deuxième type de bras d'entraînement et en ce que les organes de verrouillage sont escamotables entre une position de blocage destinée à bloquer les adaptateurs par rapport au deuxième type de bras d'entraînement et une position de montage destinée à autoriser une translation des adaptateurs par rapport au deuxième type de bras d'entraînement.

Le dispositif de connexion comprend donc au moins un connecteur et au moins deux adaptateurs. Ce connecteur assure la liaison du dispositif de connexion au balai d'essuyage, tandis que les adaptateurs participent à relier ce connecteur à un type particulier de bras d'entraînement. L'un des adaptateurs présente une configuration telle qu'il participe à relier le connecteur à un premier type de bras d'entraînement. Toutefois, lorsqu'on lui adjoint un autre adaptateur tel que proposé par l'invention, la combinaison formée par ces deux adaptateurs participe à relier le connecteur à un deuxième type de bras d'entraînement, distinct du premier type de bras d'entraînement.

Ces adaptateurs sont aptes à coopérer avec le bras d'entraînement adapté à la réception de cette combinaison d'adaptateurs par le biais de leurs organes de verrouillage superposés, chaque adaptateur comprenant un tel organe de verrouillage. Lors de l'assemblage des adaptateurs pour former la combinaison capable de participer à relier le connecteur au deuxième type de bras d'entraînement, l'organe de verrouillage de l'un des adaptateurs vient se superposer à l'organe de verrouillage de l'autre adaptateur, solidarisant le balai d'essuyage au bras d'entraînement.

Le blocage, ou verrouillage, correspond à un enclenchement d'une portion des organes de verrouillage dans une ouverture, par exemple un orifice ou un trou, percée dans une paroi d'une chape du bras d'entraînement. Lorsque les organes de verrouillage sont dans une position de blocage de l'adaptateur, ces organes de verrouillage empêchent la translation du dispositif de connexion selon une direction longitudinale, qui correspond à une direction d'allongement de ce dispositif de connexion. A l'inverse, lorsque les organes de verrouillage sont dans une position de montage de l'adaptateur, une telle translation est facilitée. Le dispositif de connexion doit en effet pouvoir, afin d'être monté dans le bras d'entraînement, coulisser dans celui-ci.

Dans la position de blocage, les organes de verrouillage font saillie du dispositif de connexion. On entend par faire saillie que l'organe de verrouillage de l'un des adaptateurs dépasse du plan dans lequel s'étend principalement une paroi supérieure de cet adaptateur, et que l'organe de verrouillage de l'autre adaptateur dépasse du plan dans lequel s'étend principalement une paroi supérieure de cet autre adaptateur. De telles saillies constituent des moyens de butée, qui empêchent la translation du dispositif de connexion. Au contraire, dans la position de montage les organes de verrouillage ne font plus saillie et sont ainsi escamotés, et le coulissement du dispositif de connexion dans la chape du bras d'entraînement est alors facilité.

Selon une autre caractéristique de l'invention, chaque organe de verrouillage comprend une languette souple et un bouton poussoir disposé à une extrémité libre de la languette souple.

Ces languettes sont souples en ce sens qu'elles sont déformables élastiquement dans leur domaine d'élasticité, permettant notamment aux organes de verrouillage de s'escamoter puis de revenir à une position dite de blocage.

Selon une autre caractéristique, les languettes souples des organes de verrouillage sont aptes à se superposer, et sont superposées lorsque les deux adaptateurs sont imbriqués.

Selon une caractéristique, les boutons poussoirs des organes de verrouillage sont aptes à se superposer, et sont superposés lorsque les deux adaptateurs sont imbriqués. On comprend que le bouton poussoir de l'un des adaptateurs peut donc recouvrir, au moins en partie, notamment verticalement, le bouton poussoir de l'autre adaptateur.

Lorsque les organes de verrouillage des adaptateurs ne sont pas superposés, ils sont tous deux dans une position de repos. On entend par position de repos que les languettes souples de ces organes de verrouillage ne sont pas déformées élastiquement, c'est-à-dire qu'elles s'étendent sensiblement dans les plans ou au-dessus des parois supérieures des adaptateurs qui les comprenne. À l'inverse, lorsque les organes de verrouillage sont superposés, le bouton poussoir du deuxième adaptateur recouvre, au moins en partie, le bouton poussoir du premier adaptateur. Ce bouton poussoir du deuxième adaptateur vient alors en butée contre le bouton poussoir du premier adaptateur et conduit cette languette souple du deuxième adaptateur à sortir du plan dans lequel s'étend la paroi supérieure du deuxième adaptateur.

Selon une autre caractéristique, les adaptateurs comprennent un premier adaptateur et un deuxième adaptateur, le bouton poussoir du premier adaptateur étant destiné à se loger dans un orifice d'une chape du premier type de bras d'entraînement, et les boutons poussoirs du premier adaptateur et du deuxième adaptateur sont destinés à s'étendre au moins en partie dans un trou d'une chape du second type de bras d'entraînement.

Le bouton poussoir du premier adaptateur est configuré pour se loger dans un orifice réalisé dans la chape du premier type de bras d'entraînement, solidarisant ainsi le premier adaptateur à ce premier type de bras d'entraînement. En présence d'une combinaison de deux adaptateurs, comme c'est le cas dans le présent dispositif de connexion, les boutons poussoirs de l'un et l'autre des adaptateurs se logent, au moins en partie, dans un trou ménagé dans la chape du second type de bras d'entraînement. Ces deux boutons poussoirs participent donc à bloquer la translation du dispositif de connexion. Les deux boutons poussoirs s'étendent dans le trou ménagé dans la chape du second type de bras d'entraînement de telle sorte que le bouton poussoir du deuxième adaptateur fait saillie au-dessus de la paroi supérieure de la chape du second type de bras d'entraînement, tandis que le bouton poussoir du premier adaptateur s'étend au moins dans l'épaisseur de cette paroi supérieure, par exemple en s'étendant à l'intérieur d'une cavité délimitée par le bouton poussoir du deuxième adaptateur.

Selon une caractéristique de l'invention, le bouton poussoir du premier adaptateur est au contact du bouton poussoir du deuxième adaptateur quand les organes de verrouillage se superposent.

Une telle superposition permet de solidariser la combinaison des adaptateurs au deuxième type de bras d'entraînement.

Le bouton poussoir du deuxième adaptateur vient en butée contre le bouton poussoir du premier adaptateur. Une telle butée déforme élastiquement la languette souple sur laquelle est disposé le bouton poussoir du deuxième adaptateur. De la même façon, lorsque le dispositif de connexion est en position de blocage dans le bras d'entraînement, la butée du bouton poussoir du deuxième adaptateur contre le bouton poussoir du premier adaptateur déforme élastiquement la languette souple du premier adaptateur. Le bouton poussoir du premier adaptateur est alors au moins en partie escamoté, c'est-à-dire qu'il n'est pas revenu dans sa position de repos.

Selon une autre caractéristique, chaque adaptateur présente une section en U qui délimite un logement, l'un des adaptateurs étant disposé dans le logement de l'autre adaptateur. Les adaptateurs, qui sont donc des pièces sensiblement en forme de U selon une section transversale, peuvent ainsi s'imbriquer les uns dans les autres. Un adaptateur en U peut recouvrir un autre adaptateur en U, facilitant une association de plusieurs adaptateurs au sein d'un même dispositif de connexion.

Selon une caractéristique de l'invention, les adaptateurs sont associés l'un à l'autre par emboîtement amovible. Les adaptateurs peuvent ainsi être associés et dissociés aisément, respectivement par emboîtement de l'un dans le logement de l'autre et par déboîtement de l'un par rapport à l'autre. Un tel emboîtement amovible peut notamment être un clipsage.

L'invention concerne en outre un balai d'essuyage comprenant un dispositif de connexion tel que décrit précédemment.

L'invention porte par ailleurs sur un système d'essuyage comprenant un bras d'entraînement porteur d'un balai d'essuyage comprenant un dispositif de connexion, le balai d'essuyage étant relié au bras d'entraînement par l'intermédiaire du dispositif de connexion décrit ci-dessus.

D'autres caractéristiques, détails et avantages de l'invention ressortiront plus clairement à la lecture de la description qui suit d'une part, et d'un exemple de réalisation donné à titre indicatif et non limitatif en référence aux dessins annexés d'autre part, sur lesquels :
[Fig. 1] présente, schématiquement, une vue en perspective d'un système d'essuyage dans lequel un dispositif de connexion selon l'invention relie un balai d'essuyage à un bras d'entraînement ;
[Fig. 2] est une vue en perspective d'un premier adaptateur et d'un deuxième adaptateur composant le dispositif de connexion de la figure 1 ;
[Fig. 3] est une vue en perspective d'une combinaison du premier adaptateur et du deuxième adaptateur de la figure 2, le premier adaptateur étant emboîté dans le deuxième adaptateur ;
[Fig. 4] est une vue en perspective du dispositif de connexion de la figure 1, solidaire d'un balai d'essuyage ;
[Fig. 5] est une vue de coupe de la combinaison du premier adaptateur et du deuxième adaptateur de la figure 3, montée dans un deuxième type de bras d'entraînement.

Sur les figures, les éléments communs à plusieurs figures conservent la même référence.

Dans la description détaillée qui va suivre, les dénominations « longitudinale », « transversale » et « verticale » se réfèrent à l'orientation du dispositif de connexion selon l'invention. Une direction longitudinale correspond à une direction principale d'allongement du balai d'essuyage duquel le dispositif de connexion est rendu solidaire, cette direction longitudinale étant parallèle à un axe longitudinal L d'un repère L, V, T illustré sur les figures. Une direction verticale correspond à une direction dans laquelle se superposent les organes de verrouillage, cette direction verticale étant parallèle à un axe vertical V du repère L, V, T et cet axe vertical V étant perpendiculaire à l'axe longitudinal L. Enfin, une direction transversale correspond à une direction parallèle à un axe transversal T du repère L, V, T, cet axe transversal Tétant perpendiculaire à l'axe longitudinal L et à l'axe vertical V.

En outre, les dénominations « inférieure » et « supérieure » concernant les éléments du dispositif de connexion s'entendent relativement à l'éloignement de ces éléments du balai d'essuyage, une extrémité inférieure de tels éléments correspondant à l'extrémité disposée au voisinage de ce balai d'essuyage tandis qu'une extrémité supérieure correspond à l'extrémité disposée à distance du balai d'essuyage.

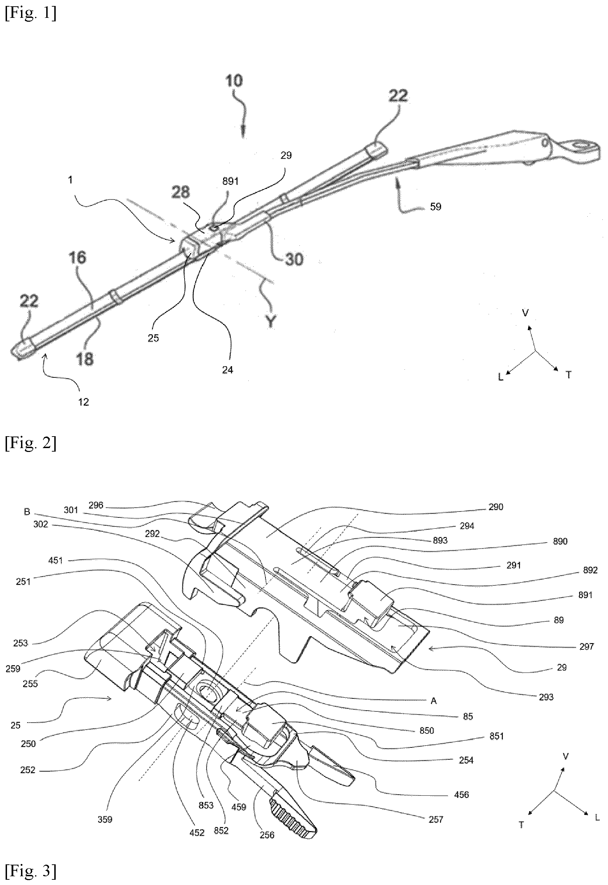

La figure 1 illustre ainsi un système d'essuyage 10 selon l'invention, comportant un balai d'essuyage 12 et un bras d'entraînement 59 du balai d'essuyage 12. Le balai d'essuyage 12 comprend un corps longitudinal 16, une lame d'essuyage 18, en général en caoutchouc, et au moins une vertèbre, non visible, qui rigidifie la lame d'essuyage 18 et favorise son application sur un pare-brise de véhicule.

Le balai d'essuyage 12 schématiquement représenté comprend en outre des embouts d'extrémité ou agrafes d'accrochage 22 de la lame d'essuyage 18 et de la vertèbre sur le corps longitudinal 16, ces embouts d'extrémité 22 étant situés à chacune des extrémités longitudinales du corps longitudinal 16.

Le balai d'essuyage 12 porte, sensiblement en son milieu, un dispositif de connexion 1 selon l'invention. Ce dispositif de connexion 1 comprend notamment un connecteur 24, et au moins deux adaptateurs.

Ces au moins deux adaptateurs, ici un premier adaptateur 25 et un deuxième adaptateur 29, participent à relier le connecteur 24 à un type particulier de bras d'entraînement, qui est ici un deuxième type de bras d'entraînement 59. Les adaptateurs 25 et 29 sont montés sur le connecteur 24 de façon à garder un degré de liberté en pivotement autour d'un axe d'articulation Y qui est un axe transversal sensiblement perpendiculaire à l'axe longitudinal du balai d'essuyage 12. Ce degré de liberté autorise un pivotement du balai d'essuyage 12 vis-à-vis du bras d'entraînement 59 et permet ainsi au balai d'essuyage 12 de suivre la courbure du pare-brise lors de ses déplacements. Les adaptateurs 25 et 29 peuvent être désolidarisés du bras d'entraînement 59, par exemple par appui sur un bouton d'actionnement, ici un bouton poussoir 891 porté par le deuxième adaptateur 29.

Le bras d'entraînement 59 est entraîné par un moteur, non représenté, pour suivre un mouvement angulaire de va-et-vient permettant d'évacuer l'eau, et éventuellement d'autres éléments indésirables recouvrant le pare-brise. Les adaptateurs 25 et 29 assurent la liaison du balai d'essuyage 12 au bras d'entraînement 59. Plus particulièrement, ils participent à la liaison d'une tête ou chape 28 du bras d'entraînement 59, qui peut être formée d'un seul tenant avec le bras d'entraînement 59 ou encore être rapportée et fixée sur une tige de celui-ci.

La chape 28 a une forme allongée selon une direction générale sensiblement parallèle à la direction longitudinale du balai d'essuyage 12. La chape 28 se prolonge, à l'une de ses extrémités longitudinales, par une partie de liaison 30 à la tige du bras d'entraînement 59.

La figure 2 présente une vue en perspective du premier adaptateur 25 et du deuxième adaptateur 29 composant le dispositif de connexion 1 de la figure 1.

Le premier adaptateur 25 s'étend principalement selon la direction longitudinale, et présente une section transversale sensiblement en forme de U. Ce premier adaptateur 25 peut notamment, lorsqu'il constitue l'unique adaptateur d'un dispositif de connexion, participer à relier le connecteur 24 à un premier type de bras d'entraînement, non illustré sur la présente figure. Il peut également, lorsqu'il est utilisé en combinaison avec le deuxième adaptateur 29, participer à relier le connecteur 24 à un deuxième type de bras d'entraînement, le bras d'entraînement 59 de la figure 1.

Ce premier adaptateur 25 présente un corps 254 qui comprend une première paroi latérale 251 et une deuxième paroi latérale 252 sensiblement parallèles entre elles, à distance l'une de l'autre. Ces parois 251, 252 sont reliées entre elles par une paroi supérieure 250 qui leur est sensiblement perpendiculaire. Les parois 250, 251, 252 de ce premier adaptateur 25 présentent une forme allongée selon la direction longitudinale, et elles définissent entre elles un logement interne 253 destiné à accueillir le connecteur 24.

Les parois latérales 251 et 252 sont par ailleurs équipées respectivement d'un premier orifice traversant 451 et d'un deuxième orifice traversant 452, ouverts sur le logement interne 253. Le premier orifice 451 est sensiblement circulaire tandis que le deuxième orifice 452 est sensiblement parallélépipédique. Ces orifices 451 et 452 définissent un axe de pivotement du premier adaptateur 25 relativement au connecteur 24, non représenté sur la présente figure, et par extension du balai d'essuyage 12 relié au premier adaptateur 25 relativement au bras d'entraînement relié au connecteur 24.

À une de ses extrémités longitudinales, le corps 254 du premier adaptateur 25 est relié à une tête 255, dont les dimensions verticales et transversales sont supérieures à celles du corps 254 du premier adaptateur 25. On comprend ainsi que la tête 255 s'étend au-delà d'un plan longitudinal et transversal dans lequel s'étend la paroi supérieure 250, et au-delà d'un plan longitudinal et vertical dans lequel s'étendent les parois latérales 251 et 252. La tête 255 est notamment un moyen de verrouillage. En effet, lorsque le balai d'essuyage 12 est assemblé sur le bras d'entraînement 59 par l'intermédiaire du dispositif de connexion 1 comme illustré sur la figure 1, cette tête 255 forme une butée pour la chape 28 du bras d'entraînement 59, empêchant ainsi la translation de celle-ci au-delà du corps 254 du premier adaptateur 25.

À une autre de ses extrémités longitudinales, la paroi supérieure 250 du premier adaptateur 25 se rétrécit de façon à former une pointe 257, qui est en porte-à-faux par rapport au corps 255. Au niveau de cette autre extrémité longitudinale, le corps 254 du premier adaptateur 25 et plus particulièrement les parois latérales 251, 252 se poursuivent chacune par une jambe 256 déformable élastiquement. Ces jambes 256 peuvent ainsi être rapprochées l'une de l'autre par déformation élastique. Les jambes 256 sont sensiblement symétriques selon un plan de symétrie s'étendant dans des directions longitudinale et verticale, situé à équidistance de la première paroi latérale 251 et de la deuxième paroi latérale 252. Chaque jambe 256 présente en outre une portion de verrouillage 456, conformée pour coopérer avec des encoches disposées sur la chape 28 de bras d'entraînement 59 afin de verrouiller l'assemblage du premier adaptateur 25 avec cette dernière, constituant ainsi un autre moyen de verrouillage.

La paroi supérieure 250 est percée d'une première ouverture 259, une deuxième ouverture 359 et une troisième ouverture 459, alignées selon la direction longitudinale et donnant sur le logement interne 253. La troisième ouverture 459, qui est au voisinage des jambes 256, est en partie recouverte par un organe de verrouillage 85. Cet organe de verrouillage 85 comprend notamment une languette souple 850 et un bouton poussoir 851. Cette languette 850 s'étend principalement selon la direction longitudinale et présente une extrémité fixe 853 à distance des jambes 256, qui est reliée à la paroi latérale 251 et à la paroi latérale 252 par un pontet, et une extrémité libre 852, mobile, au voisinage des jambes 256. La languette 850 est déformable élastiquement et son extrémité libre 852 porte le bouton poussoir 851. La languette 850 et le bouton poussoir 851 peuvent ainsi pivoter autour d'un axe A, situé au niveau de l'extrémité fixe 853 qui joue alors un rôle de charnière pour l'organe de verrouillage. Au repos, c'est-à-dire sans contrainte, la languette 850 est disposée d'une façon telle que le bouton poussoir 851 se situe au-dessus d'un plan dans lequel s'étend la paroi supérieure 250. On entend par là que le bouton poussoir 851 est à distance de cette paroi supérieure 250 du premier adaptateur 25 selon la direction verticale, à l'opposé du logement interne 253. Lors du montage par translation du premier adaptateur 25 dans une chape d'un premier type de bras d'entraînement, le bouton poussoir 851 s'escamote pour glisser dans cette chape et s'engage par encliquetage élastique dans un orifice correspondant de la chape où il se loge afin de verrouiller le premier adaptateur 25 vis-à-vis de cette dernière.

Le deuxième adaptateur 29 est une pièce dont une section transversale est sensiblement en forme de U. Ce deuxième adaptateur 29 comporte une paroi supérieure 290 ainsi qu'une première paroi latérale 291 et une deuxième paroi latérale 292. La paroi supérieure 290 s'étend principalement selon une direction longitudinale et selon une direction transversale, tandis que les parois latérales 291 et 292 s'étendent principalement selon une direction longitudinale et une direction verticale. Les parois latérales 291 et 292 sont ainsi parallèles entre elles et perpendiculaires à la paroi supérieure 290. Ces parois 290, 291 et 292 définissent un logement interne 293, ce logement interne étant notamment apte à recevoir un connecteur 24 ou un autre adaptateur. Le deuxième adaptateur 29 présente un épaulement 301, qui comporte une patte courbée 296 s'étendant depuis une des extrémités longitudinales du deuxième adaptateur 29 et à distance de celle-ci. Cette patte courbée 296 participe à l'assemblage du deuxième adaptateur 29 avec d'autres pièces et notamment avec d'autres adaptateurs, comme par exemple le premier adaptateur 25. Ce premier adaptateur 25 présente en effet, sur l'une des faces internes de sa tête 255 non visible sur la figure 2, une portion interne apte à recevoir cette patte courbée 296 du deuxième adaptateur 29, formant ainsi un moyen de verrouillage.

L'épaulement 301 de l'extrémité longitudinale du deuxième adaptateur 29 qui comporte la patte courbée 296 se prolonge, à distance de cette patte courbée 296, par deux oreilles 302 qui sont plaqués contre les parois latérales 291 et 292. Ces oreilles 302 permettent d'arrimer le deuxième adaptateur 29 à un bras d'entraînement, et constituent à ce titre d'autres moyens de verrouillage.

La paroi supérieure 290 du deuxième adaptateur 29 est percée de deux fentes parallèles 294, disposées sur la paroi supérieure 290 au voisinage de chacune des parois latérales 291 et 292. Ces fentes parallèles 294 sont alignées selon la direction transversale et donnent sur le logement interne 293. Ces fentes parallèles 294 débouchent, à une extrémité longitudinale du deuxième adaptateur 29 qui ne porte pas la patte courbée 296, sur une ouverture 297 percée elle aussi dans la paroi supérieure 290. Cette ouverture 297 est en partie recouverte par un organe de verrouillage 89 constitutif du deuxième adaptateur 29. Cet organe de verrouillage 89 comprend notamment une languette souple 890 et un bouton poussoir 891. Cette languette 890 est reliée à la paroi supérieure 290 du deuxième adaptateur 29 par une première extrémité 893, et présente une extrémité libre 892, à une distance de l'extrémité longitudinale qui porte la patte courbée 296 plus importante que la distance qui sépare cette patte courbée 296 de la première extrémité 893. La languette 890 est déformable élastiquement, et son extrémité libre 892 porte le bouton poussoir 891. La languette 890 et le bouton poussoir 891 peuvent ainsi pivoter autour d'un axe B, situé au niveau de la première extrémité fixe 893 qui joue le rôle de charnière. Au repos, c'est-à-dire sans contrainte, la languette 890 est disposée d'une façon telle que le bouton poussoir 891 se situe au-dessus du plan dans lequel s'étend la paroi supérieure 290. On comprend que le bouton poussoir 891 est à distance de cette paroi supérieure 290 selon la direction verticale, à l'opposé du logement interne 293.

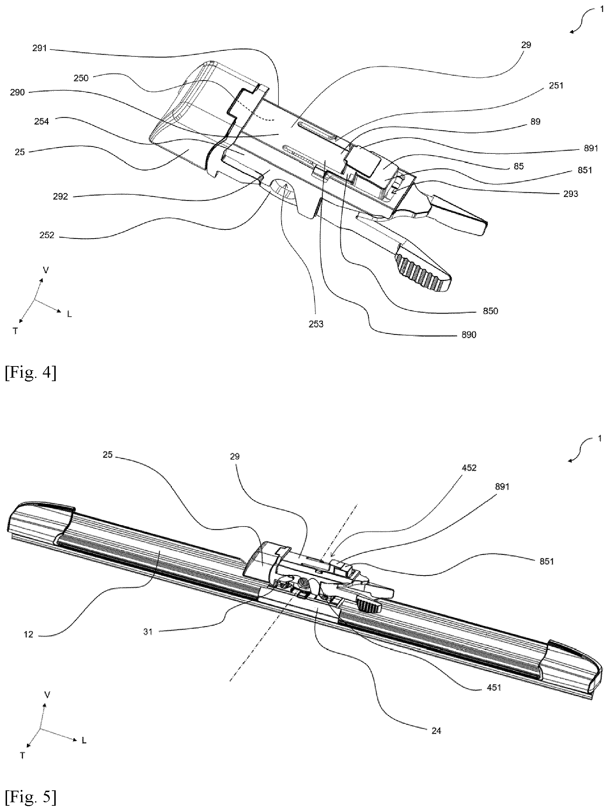

La figure 3 est une représentation en perspective d'une combinaison du premier adaptateur 25 et du deuxième adaptateur 29 de la figure 2. Ces deux adaptateurs 25 et 29 sont ici représentés emboîtés, tels qu'ils le sont dans le dispositif de connexion 1 selon l'invention. Il s'agit d'un emboîtement amovible, c'est-à-dire que les adaptateurs 25 et 29 peuvent être tour à tour associés et dissociés, sans destruction de l'un ou de l'autre. Cet emboîtement amovible peut par exemple être un clipsage. Le premier adaptateur 25 et le deuxième adaptateur 29 présentant tous deux des sections en U qui délimitent leurs logements internes 253 et 293 respectifs, ces adaptateurs 25 et 29 peuvent s'emboîter l'un dans l'autre. C'est ici le premier adaptateur 25 qui est disposé dans le logement interne 293 du deuxième adaptateur 29.

Lorsque le premier adaptateur 25 et le deuxième adaptateur 29 sont ainsi combinés, le deuxième adaptateur 29 recouvre le premier adaptateur 25 de telle sorte que ses parois latérales 291, 292 sont placées en regard des parois latérales 251, 252 du premier adaptateur 25. La paroi supérieure 290 du deuxième adaptateur 29 recouvre partiellement la paroi supérieure 250 du premier adaptateur 25, ce deuxième adaptateur 29 reposant sur le corps 254 du premier adaptateur 25.

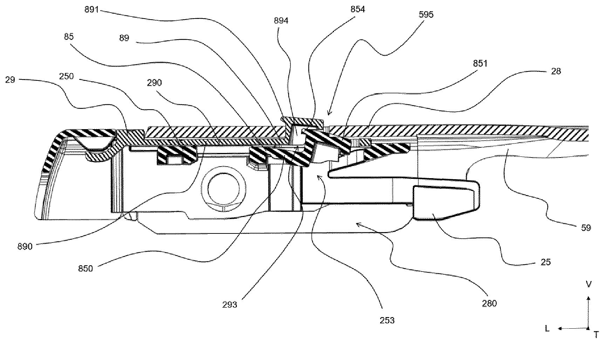

L'organe de verrouillage 89 du deuxième adaptateur 29 se superpose à l'organe de verrouillage 85 du premier adaptateur 25, permettant ainsi de solidariser la combinaison de ces adaptateurs 25 et 29 au deuxième type de bras d'entraînement 59, représenté en figure 5. La languette 890 du deuxième adaptateur 29 vient recouvrir la languette 850 du premier adaptateur 25. De la même façon, les boutons poussoirs 851 et 891 étant aptes à se superposer, le bouton poussoir 891 du deuxième adaptateur 29 recouvre au moins en partie le bouton poussoir 851 du premier adaptateur 25.

Sur la figure 4, la combinaison entre le premier adaptateur 25 et le deuxième adaptateur 29 telle que décrite précédemment est associée à un connecteur 24 pour former un dispositif de connexion 1 selon l'invention. Ce dispositif de connexion 1 est ici solidarisé à un balai d'essuyage 12. Le premier adaptateur 25 comprend au moins une liaison pivot 31 le reliant mécaniquement au connecteur 24, au niveau de ses orifices 451 et 452. Cette liaison pivot 31 constitue une articulation qui assure la rotation du connecteur 24 par rapport au premier adaptateur 25. Ainsi, lorsque le connecteur 24 est solidaire d'un balai d'essuyage 12 comme c'est le cas sur la présente figure, par exemple par sertissage, ce balai d'essuyage 12 peut pivoter par rapport au premier adaptateur 25 et au bras d'entraînement 59 auquel ce premier adaptateur 25 est relié. De ce fait, le balai d'essuyage 12 peut lors de ses déplacements suivre parfaitement la surface courbée du pare-brise du véhicule qu'il équipe.

La figure 5 est une vue de coupe de la combinaison du premier adaptateur 25 et du deuxième adaptateur 29 de la figure 3, cette combinaison étant ici illustrée montée dans le deuxième type de bras d'entraînement 59, et plus particulièrement dans la chape 28 de ce deuxième type de bras d'entraînement 59.

L'organe de verrouillage 85 du premier adaptateur 25 et l'organe de verrouillage 89 du deuxième adaptateur 29 sont escamotables entre une position de blocage des adaptateurs 25 et 29 par rapport au deuxième bras d'entraînement 59 et une position de montage de ces adaptateurs 25 et 29 par rapport à ce deuxième bras d'entraînement 59. La position de montage correspond à la position que prennent les organes de verrouillage 85 et 89 lorsque les adaptateurs 25 et 29 sont en train d'être insérés dans le bras d'entraînement 59, et plus précisément dans la chape 28 de ce bras d'entraînement 59. La position de blocage correspond, elle, à la position que prennent les organes de verrouillage 85 et 89 une fois que les adaptateurs 25 et 29 sont montés dans cette chape 28 du bras d'entraînement 59, la translation des adaptateurs 25 et 29 selon une direction longitudinale étant alors empêchée par les organes de verrouillage 85 et 89 combinés l'un avec l'autre.

Dans la position de montage, les languettes souples 850 et 890 des organes de verrouillage 85 et 89 sont déformées élastiquement de telle sorte que la languette 850 ne se trouve plus dans le même plan que la paroi supérieure 250 du premier adaptateur 25, et de la même façon que la languette 890 ne se trouve plus dans le même plan que la paroi supérieure 290 du deuxième adaptateur 29. Les boutons poussoirs 851 et 891 s'escamotent alors dans les logements internes 253 et 293 respectivement, et ne font donc plus saillie par rapport à ces plans. Les adaptateurs 25 et 29 qu'ils équipent peuvent alors être insérés dans la chape 28 du bras d'entraînement 59 sans que la translation nécessaire à une telle insertion ne soit bloquée par ces saillies.

À l'inverse, dans la position de blocage telle que représentée sur la figure 5, les boutons poussoirs 851 et 891 font saillie par rapport aux plans dans lesquels s'étendent les parois supérieures 250 et 290 de leurs adaptateurs respectifs. La languette 890 du deuxième adaptateur 29 est alignée, selon la direction longitudinale, avec la paroi supérieure 290 du deuxième adaptateur 29 ; toutes deux se trouvent dans le même plan. La languette 850 du premier adaptateur 25 n'est, elle, pas alignée avec la paroi supérieure 250 de celui-ci selon la direction longitudinale. Cette languette 850 du premier adaptateur 25 est en effet déformée élastiquement de façon que le bouton poussoir 851 qu'elle porte soit, au moins en partie, escamoté dans le logement interne 253 du premier adaptateur 25.

Lorsque les organes de verrouillage 85 et 89 sont en position de blocage, les boutons poussoirs 851 et 891 s'étendent au moins en partie dans un trou 595 de la chape 28 du deuxième bras d'entraînement 59. Ces organes de verrouillage 85 et 89 se superposent afin de solidariser la combinaison des adaptateurs 25 et 29 au bras d'entraînement 59, le bouton poussoir 851 du premier adaptateur 25 étant au contact du bouton poussoir 891 du deuxième adaptateur 29. Ce bouton poussoir 85 du premier adaptateur 25 pousse le bouton poussoir 89 du deuxième adaptateur 29 à travers le trou 595, vers l'extérieur d'une cavité de réception 280 de la chape 28 dans laquelle se trouvent les adaptateurs 25 et 29. Le bouton poussoir 891 du deuxième adaptateur 29 vient en butée contre l'épaisseur de la paroi supérieure de la chape 28 au niveau du trou 595, tandis que le bouton poussoir 851 du premier adaptateur 25 s'étend dans l'épaisseur de cette paroi supérieure de la chape 28. De manière particulière, un nez 854 du bouton poussoir 851 du premier adaptateur 25 s'étend dans une cavité 894 du bouton poussoir 891 du deuxième adaptateur 29. De cette façon, les boutons poussoirs 851 et 891 participent à bloquer la translation selon la direction longitudinale des adaptateurs 25 et 29 au sein du deuxième bras d'entraînement 59.

La présente invention propose ainsi un dispositif de connexion dans lequel la superposition des organes de verrouillage d'un premier adaptateur et d'un deuxième adaptateur permet de relier un balai d'essuyage à un type particulier de bras d'entraînement, un tel bras d'entraînement étant différent du type de bras d'entraînement avec lequel le premier adaptateur, seul, peut coopérer.

## Revendications

1. Dispositif de connexion (1) pour véhicule, destiné à relier un balai d'essuyage à un bras d'entraînement, comprenant au moins un connecteur configuré pour être rendu solidaire du balai d'essuyage (12) et au moins deux adaptateurs (25, 29), l'un des adaptateurs (25) étant configuré pour relier le connecteur (24) à un premier type de bras d'entraînement et une combinaison des deux adaptateurs (25, 29) étant configurée pour relier le connecteur à un deuxième type de bras d'entraînement (59), les adaptateurs (25, 29) comprenant un organe de verrouillage (85, 89) configuré pour verrouiller la combinaison des deux adaptateurs au deuxième type de bras d'entraînement (59), ces organes de verrouillage (85, 89) se superposant pour solidariser la combinaison des deux adaptateurs (25, 29) au deuxième type de bras d'entraînement (59) **caractérisé en ce que** les organes de verrouillage (85, 89) sont escamotables entre une position de blocage destinée à bloquer les adaptateurs (25, 29) par rapport au deuxième type de bras d'entraînement (59) et une position de montage destinée à autoriser une translation des adaptateurs (25, 29) par rapport au deuxième type de bras d'entraînement (59).

2. Dispositif de connexion (1) selon l'une quelconque des revendications précédentes, dans lequel chaque organe de verrouillage (85, 89) comprend une languette souple (850, 890) et un bouton poussoir (851, 891) disposé à une extrémité libre (852, 892) de la languette souple (850, 890).

3. Dispositif de connexion (1) selon la revendication précédente, dans lequel les boutons poussoirs (851, 891) des organes de verrouillage (85, 89) sont aptes à se superposer.

4. Dispositif de connexion (1) selon la revendication précédente, dans lequel les adaptateurs (25, 29) comprennent un premier adaptateur (25) et un deuxième adaptateur (29), le bouton poussoir (851) du premier adaptateur (25) étant destiné à se loger dans un orifice d'une chape du premier type de bras d'entraînement, et dans lequel les boutons poussoirs (851, 891) du premier adaptateur (25) et du deuxième adaptateur (29) sont destinés à s'étendre au moins en partie dans un trou (595) d'une chape (28) du second type de bras d'entraînement (59).

5. Dispositif de connexion (1) selon la revendication précédente, dans lequel le bouton poussoir (851) du premier adaptateur (25) est au contact du bouton poussoir (891) du deuxième adaptateur (29) quand les organes de verrouillage (85, 89) se superposent.

6. Dispositif de connexion (1) selon l'une quelconque des revendications précédentes, dans lequel chaque adaptateur (25, 29) présente une section en U qui délimite un logement (253, 293), l'un des adaptateurs (25) étant disposé dans le logement (293) de l'autre adaptateur (29).

7. Dispositif de connexion (1) selon l'une quelconque des revendications précédentes, dans lequel les adaptateurs (25, 29) sont associés l'un à l'autre par emboîtement amovible.

8. Balai d'essuyage (12) comprenant un dispositif de connexion (1) selon l'une quelconque des revendications précédentes.

9. Système d'essuyage comprenant un bras d'entraînement (59) porteur d'un balai d'essuyage (12) selon la revendication précédente, le balai d'essuyage (12) étant relié au bras d'entraînement (59) par l'intermédiaire du dispositif de connexion (1).

## Patentansprüche

1. Verbindungsvorrichtung (1) für ein Fahrzeug, welche dazu bestimmt ist, ein Wischblatt mit einem Antriebsarm zu verbinden, und mindestens einen Verbinder, der dafür ausgelegt ist, mit dem Wischblatt (12) fest verbunden zu werden, und mindestens zwei Adapter (25, 29) umfasst, wobei einer der Adapter (25) dafür ausgelegt ist, den Verbinder (24) mit einem ersten Typ von Antriebsarm zu verbinden, und eine Kombination der zwei Adapter (25, 29) dafür ausgelegt ist, den Verbinder mit einem zweiten Typ von Antriebsarm (59) zu verbinden, wobei die Adapter (25, 29) ein Verriegelungsorgan (85, 89) umfassen, das dafür ausgelegt ist, die Kombination der zwei Adapter mit dem zweiten Typ von Antriebsarm (59) zu verriegeln, wobei diese Verriegelungsorgane (85, 89) übereinanderliegen, um die Kombination der zwei Adapter (25, 29) mit dem zweiten Typ von Antriebsarm (59) fest zu verbinden, **dadurch gekennzeichnet, dass** die Verriegelungsorgane (85, 89) einziehbar sind zwischen einer Blockierposition, die dazu bestimmt ist, die Adapter (25, 29) bezüglich des zweiten Typs von Antriebsarm (59) zu blockieren, und einer Montageposition, die dazu bestimmt ist, eine Translation der Adapter (25, 29) bezüglich des zweiten Typs von Antriebsarm (59) zu ermöglichen.

2. Verbindungsvorrichtung (1) nach einem der vorhergehenden Ansprüche, wobei jedes Verriegelungsorgan (85, 89) eine flexible Zunge (850, 890) und eine Drucktaste (851, 891), die an einem freien Ende (852, 892) der flexiblen Zunge (850, 890) angeordnet ist, umfasst.

3. Verbindungsvorrichtung (1) nach dem vorhergehenden Anspruch, wobei die Drucktasten (851, 891) der Verriegelungsorgane (85, 89) geeignet sind, übereinander zu liegen zu kommen.

4. Verbindungsvorrichtung (1) nach dem vorhergehenden Anspruch, wobei die Adapter (25, 29) einen ersten Adapter (25) und einen zweiten Adapter (29) umfassen, wobei die Drucktaste (851) des ersten Adapters (25) dazu bestimmt ist, in einer Öffnung einer Abdeckung des ersten Typs von Antriebsarm aufgenommen zu werden, und wobei die Drucktasten (851, 891) des ersten Adapters (25) und des zweiten Adapters (29) dazu bestimmt sind, sich wenigstens teilweise in einem Loch (595) einer Abdeckung (28) des zweiten Typs von Antriebsarm (59) zu erstrecken.

5. Verbindungsvorrichtung (1) nach dem vorhergehenden Anspruch, wobei sich die Drucktaste (851) des ersten Adapters (25) in Kontakt mit der Drucktaste (891) des zweiten Adapters (29) befindet, wenn die Verriegelungsorgane (85, 89) übereinanderliegen.

6. Verbindungsvorrichtung (1) nach einem der vorhergehenden Ansprüche, wobei jeder Adapter (25, 29) einen U-förmigen Querschnitt aufweist, der eine Aufnahme (253, 293) begrenzt, wobei einer der Adapter (25) in der Aufnahme (293) des anderen Adapters (29) angeordnet ist.

7. Verbindungsvorrichtung (1) nach einem der vorhergehenden Ansprüche, wobei die Adapter (25, 29) durch lösbares Zusammenstecken miteinander verbunden sind.

8. Wischblatt (12), welches eine Verbindungsvorrichtung (1) nach einem der vorhergehenden Ansprüche umfasst.

9. Wischsystem, welches einen Antriebsarm (59) umfasst, der ein Wischblatt (12) nach dem vorhergehenden Anspruch trägt, wobei das Wischblatt (12) mit dem Antriebsarm (59) durch eine Verbindungsvorrichtung (1) verbunden ist.

## Claims

1. Connection device (1) for a vehicle, intended to connect a wiper blade to a driving arm, comprising at least one connector configured to be secured to the wiper blade (12) and at least two adapters (25, 29), one of the adapters (25) being configured for connecting the connector (24) to a first type of driving arm, and a combination of the two adapters (25, 29) being configured for connecting the connector to a second type of driving arm (59), the adapters (25, 29) comprising a locking member (85, 89) configured to lock the combination of the two adapters to the second type of driving arm (59), these locking members (85, 89) being superposed in order to secure the combination of the two adapters (25, 29) to the second type of driving arm (59) **characterized in that** the locking members (85, 89) are retractable between an immobilizing position intended to immobilize the adapters (25, 29) with respect to the second type of driving arm (59) and a mounting position intended to allow a translation of the adapters (25, 29) relative to the second type of driving arm (59).

2. Connection device (1) according to either one of the preceding claims, wherein each locking member (85, 89) comprises a flexible tongue (850, 890) and a push-button (851, 891) positioned at a free end (852, 892) of the flexible tongue (850, 890).

3. Connection device (1) according to the preceding claim, wherein the push-buttons (851, 891) of the locking members (85, 89) are able to be superposed with one another.

4. Connection device (1) according to the preceding claim, wherein the adapters (25, 29) comprise a first adapter (25) and a second adapter (29), the push-button (851) of the first adapter (25) being intended to become lodged in an orifice of a yoke of the first type of driving arm, and wherein the push-buttons (851, 891) of the first adapter (25) and of the second adapter (29) are intended to extend at least in part into a hole (595) of a yoke (28) of the second type of driving arm (59).

5. Connection device (1) according to the preceding claim, wherein the push-button (851) of the first adapter (25) is in contact with the push-button (891) of the second adapter (29) when the locking members (85, 89) are superposed.

6. Connection device (1) as claimed in any one of the preceding claims, wherein each adapter (25, 29) has a U-shaped cross section which delimits a housing (253, 293), one of the adapters (25) being positioned in the housing (293) of the other adapter (29).

7. Connection device (1) according to any one of the preceding claims, wherein the adapters (25, 29) are combined with one another by removably fitting into one another.

8. Wiper blade (12) comprising a connection device (1) according to any one of the preceding claims.

9. Wiping system comprising a driving arm (59) bearing a wiper blade (12) according to the preceding claim, the wiper blade (12) being connected to the driving arm (59) by means of the connection device (1).
